# EUROPEAN PATENT SPECIFICATION

(11) **EP 4 147 924 B1**
(45) Date of publication and mention of the grant of the patent: **05.06.2024**
(21) Application number: 21196184.2
(22) Date of filing: 10.09.2021
(51) Int. Cl.: B60T 11/10

(54) **DECELERATION SYSTEM**
VERZÖGERUNGSSYSTEM
SYSTÈME DE DÉCÉLÉRATION

(43) Date of publication of application: 15.03.2023
(73) Proprietor: KNORR-BREMSE Systeme für Nutzfahrzeuge GmbH, 80809 München (DE)
(72) Inventor: MEDERER, Martin, 92318 Neumarkt (DE); KENNEDY, Andrew L., 80939 München (DE); STRELI, Tamas, 80638 München (DE); VENEGAS DIAZ, Fernando, 80797 München (DE); DOHANY, Tamas, 7630 Pécs (HU)

(56) References cited:
- EP-A1- 3 186 124
- US-A1- 2018 222 464
- US-A1- 2019 176 785
- US-A1- 2020 173 508

## Description

The current invention relates to a device for controlling a deceleration system, a deceleration system, a vehicle, a method and a computer program product.

To realize deceleration actuator blending, today an electro-fluidic deceleration system is used. A main deceleration request from a brake pedal is converted to an electric signal. The converting is in particular carried out by the pedal according to the pedal position. The deceleration control is distributing the brake demand to the different deceleration actuators depending on load, driving conditions, etc. targeting the requested deceleration and stability of the vehicle. Control valves close to the brake actuators are transforming the dedicated brake demand into a fluidic pressure. In addition, a retarder or an electric machine in generator mode can be used as a deceleration actuator as part of the complete deceleration system. Deceleration actuator blending is defined as a shift from one deceleration actuator to the other (example: low deceleration demand: only electric motor to recuperate the electric energy, deceleration demand is increased, additionally the mechanic brake system is used).

There is no solution known to realize deceleration actuator blending with a conventional fluidic brake system.

EP 3 186 124 A1 shows a solution for controlling the deceleration of a vehicle with a device for controlling a deceleration system of a vehicle with an input port configured to receive a fluidic main deceleration request and an output port configured to supply an electric deceleration demand to the deceleration system, wherein the device is configured to generate the electric deceleration demand according to the fluidic main deceleration request.

Therefore, it is an object of the present invention to realize deceleration actuator blending without chahging the complete deceleration system from a conventional system to an electro-fluidic deceleration system.

This object is achieved by the subject matters of the independent claims. Advantageous embodiments are the subject matters of the dependent claims.

In general, in the context of this invention, a deceleration system is understood as a system of a vehicle that is configured to decelerate the vehicle by generating a deceleration effect, in particular by generating a deceleration force or deceleration torque and applying it to the vehicle. In particular, a conventional deceleration system can be understood as a fluidic deceleration system like a fluidic brake system.

Further, in the context of this invention, deceleration actuators are understood as actuators of the deceleration system, which are configured to generate the deceleration force or deceleration torque. Such an actuator can comprise or be configured as a brake unit, in particular comprising a friction brake. Additional or alternatively, such an actuator can comprise or be configured as another deceleration actuator that is not understood as a classical brake unit. In particular, this can be a device acting on the powertrain of the vehicle and/or on at least one wheel of the vehicle. For example this can be an endurance brake like a retarder, in particular of a hydrodynamic type, or an eddy current brake, and/or an electric machine that is configured to generate a deceleration torque when it is operated in a generator mode and that is preferably configured to generate a driving torque when it is operated in a driving mode.

In the context of this invention, fluidic is understood as a physical property of a signal. In particular the term "fluidic" includes the physical properties "pneumatic" and/or "hydraulic".

According to the invention, a device for controlling a deceleration system of a vehicle is provided. The device comprises:
- an input port configured to receive a fluidic main deceleration request, and
- an output port configured to supply an electric deceleration demand to the deceleration system, wherein
the device is configured to generate the electric deceleration demand according to the fluidic main deceleration request.

According to this aspect, the device allows to convert a fluidic signal, the fluidic main deceleration request, which is in particular configured as a control demand for the deceleration system, into an electric signal, the electric deceleration demand. Therefore, the device can be provided to an existing deceleration system controlled by the fluidic main deceleration request, wherein the device can generate the electric deceleration demand in addition to the fluidic main deceleration request. Thereby, in addition to the deceleration actuators controlled according to the fluidic main deceleration request, the deceleration system can control electrical controlled deceleration actuators as well according to the same fluidic main deceleration request.

Preferably, the electric deceleration demand is configured as an electric actuator deceleration demand, which is capable to control at least one deceleration actuator, accordingly. The electric deceleration demand can alternatively be configured as an electric demand, which is supplied to the deceleration system, wherein the deceleration system itself generates an actuator deceleration demand, accordingly, in particular an electric actuator deceleration demand.

Preferably, the fluidic main deceleration request is provided by an input unit of the deceleration system, preferably comprising a brake pedal and/or an accelerator pedal and/or a driver input device, and/or by a control unit for autonomous driving. The driver input device is preferably configured for manual operation and in particular comprising a retarder input device, like a retarder lever.

The fluidic main deceleration request represents a target deceleration of the vehicle and is configured as a fluidic signal. Wherein preferably, the amount of fluid and/or its pressure is processed by the device. The fluidic main deceleration request is preferably a pneumatic or hydraulic signal.

By supplying the electric deceleration demand to a first deceleration actuator, which is configured to be actuated by an electric deceleration demand, the device allows controlling the first deceleration actuator according to the fluidic main deceleration request. Therefore, in particular when the deceleration system comprises a second deceleration actuator, which is actuated according to a fluidic deceleration demand or according to the fluidic main deceleration request, the device allows controlling the first deceleration actuator and the second deceleration actuator according to the same fluidic signal, namely the fluidic main deceleration request. In particular, brake blending between the first deceleration actuator and the second deceleration actuator can be realized.

A port, in particular in the meaning of an input port or an output port, can comprise a real port for connecting a fluidic line or an electric wire. In particular, a port for supplying or receiving electric signals like the output port can also be configured as an interface for a BUS of the vehicle or even wireless.

To generate the electric deceleration demand, the device preferably comprises a pressure determination means and/or a means for determination of the amount of fluid of the fluidic main deceleration request. Preferably, the device is configured to convert the pressure or amount of fluid of the main deceleration request into an electric signal for further processing.

Preferably, the device comprises electronic means to generate the electric deceleration demand according to the fluidic main deceleration request. Preferably, the electronic means comprise a data processing unit. The electronic means are configured to calculate the electric deceleration demand according to the amount of fluid and/or its pressure.

The device is configured to generate a fluidic deceleration demand according to the fluidic main deceleration request and to supply the fluidic deceleration demand to the deceleration system via an output port of the device. This fluidic deceleration demand can be used to control at least one deceleration actuator of the deceleration system, which is configured to be actuated by a fluidic deceleration demand. If the deceleration system comprises more than one second deceleration actuator, the same fluidic deceleration demand can be supplied to each second deceleration actuators or individual fluidic deceleration demands can be supplied to at least two second deceleration actuators.

Preferably, the fluidic deceleration demand is configured as an fluidic actuator deceleration demand, which is capable to control at least one deceleration actuator, accordingly. The fluidic deceleration demand can alternatively be configured as an fluidic demand, which is supplied to the deceleration system, wherein the deceleration system itself generates an actuator deceleration demand, accordingly, in particular a fluidic actuator deceleration demand.

Preferably, the device is configured to receive an electric input signal via an input port of the device, wherein the device is configured to generate the electric deceleration demand according to the electric input signal. The device is preferably configured to generate the electric deceleration demand according to the electric input signal when simultaneously a fluidic main deceleration request is supplied to the device. Therefore, the first deceleration actuator can be controlled by both signals, the fluidic main deceleration request and the electric input signal. In particular, the device can be configured to generate the electric deceleration demand by selecting the fluidic main deceleration request or the electric input signal or by adding them or using both according to a prioritisation. Preferably, the electric input signal is supplied by an input unit, in particular an accelerator pedal. Thereby, deceleration actuator blending can be realised by the device.

Preferably, the device is configured to generate the fluidic deceleration demand according to the electric input signal. In this case controlling of the second deceleration actuator is possible by the electric input signal as well. In particular, the device can be configured to generate the fluidic deceleration demand by selecting the fluidic main deceleration request or the electric input signal or by adding them or using both according to a prioritisation.

Preferably, the device is configured to accelerate the vehicle according to the electric signal when the electric signal corresponds to an acceleration request, which can be generated by an accelerator pedal or by a cruise control function of the vehicle. Therefore, the device is preferably configured to control the according devices of the vehicle, which are configured to accelerate the vehicle. For example this can be an electric machine, which can be particularly used for both acceleration and deceleration.

Preferably, the device is configured to process a deceleration force distribution and/or a decelerator actuator blending and/or a one pedal driving mode. Therefore, the device is configured to generate the electric deceleration demand and the fluidic deceleration demand in parallel to control both kinds of deceleration actuators, the first and the second deceleration actuator. The device is preferably configured to receive input values from the vehicle and the deceleration system for controlling the deceleration system, in particular according to a deceleration force distribution and/or a decelerator actuator blending and/or a one pedal driving mode.

Preferably, the device is configured as a modular unit, in particular comprising a housing. This leads advantageously to a device, which can be easily assembled with an existing deceleration system, in particular with a fluidic controlled deceleration system, wherein the fluidic controlled deceleration system can thereby be combined with other deceleration actuators, in particular with a first deceleration actuator as described above.

According to a further aspect of the invention, a deceleration system for a vehicle is provided, wherein the deceleration system comprises:
- at least one first deceleration actuator configured to be actuated by an electric deceleration demand;
- at least one input unit configured to generate a fluidic main deceleration request according to at least one input value, wherein
the deceleration system is configured to generate the electric deceleration demand for controlling the at least one first deceleration actuator according to the fluidic main deceleration request.

Alternatively or additionally, the deceleration system comprises a device as described above, wherein the device is configured accordingly to generate the electric deceleration demand according to the fluidic main deceleration request.

Preferably, the deceleration system can be configured according to the aspects of the device as described above.

The input value can be generated by a driver, in particular by pressing a brake pedal or an acceleration pedal (in particular in one pedal drive mode) or by at least one further driver input device, and/or by an autonomous driving control unit. The driver input device is preferably configured for manual operation and in particular comprising a retarder input device, like a retarder lever.

Preferably, the deceleration system comprises at least one second deceleration actuator configured to be actuated by a fluidic deceleration demand, and wherein the deceleration system is configured to generate the fluidic deceleration demand for controlling the at least one second deceleration actuator according to the fluidic main deceleration request, in particular during the same operating mode which is preferably a normal operating mode. That means, that the deceleration system is operated by using both, the first and second deceleration actuators, for deceleration of the vehicle and that this operating mode is preferably not a redundant mode, which is only activated in case of any failure of the deceleration system.

Preferably, the at least one input unit is configured to generate an electric input signal according to at least one further input value, wherein the deceleration system is configured to generate the electric deceleration demand according to the electric input signal.

The input value can be generated by a driver, in particular by lifting an accelerator pedal or by an autonomous driving control unit. In particular, while driving in one pedal mode, the electric input signal is generated by certain low accelerator pedal positions starting from 0% pedal position. Additionally or alternatively, the input value can be generated by a driver input device, which is preferably configured for manual operation and in particular comprising a retarder input device, like a retarder lever.

Preferably, the deceleration system is configured to generate the fluidic deceleration demand according to the electric input signal. In this case controlling of the second deceleration actuator is possible by the electric input signal as well.

Preferably, the input unit comprises a brake pedal configured to provide the fluidic main deceleration request and/or an accelerator pedal to generate the electric input signal.

Preferably, the electric deceleration demand comprises an electric or electronic signal.

Preferably, the fluidic deceleration demand comprises a pneumatic and/or hydraulic signal.

Preferably, the fluidic main deceleration request comprises a pneumatic and/or hydraulic signal.

Preferably, the at least one input value and/or the at least one further input value comprises an input value from a driver, in particular from a brake pedal and/or from an accelerator pedal, and/or from a driver input device as described above and/or from a control unit for autonomous driving. When the deceleration system is controlled by a control unit for autonomous driving, the invention allows autonomous control of the first and second deceleration actuators.

Preferably, the at least one first deceleration actuator comprises a brake unit, an endurance brake unit, in particular a retarder and/or an eddy current brake, and/or an electric machine. The brake unit of the first deceleration actuator can comprise a mechanical brake, in particular a friction brake. Such brake can comprise a drum or disk brake.

Preferably, the at least one second deceleration actuator comprises a brake unit in particular a mechanical brake, in particular a friction brake. Such brake can comprise a drum or disk brake.

Preferably, the deceleration system is configured to perform a deceleration force distribution and/or a blending operation between the at least one first deceleration actuator and the at least one second deceleration actuator and/or a one pedal driving mode.

When using a signal, in particular an electric or electronic signal from an accelerator pedal a one pedal driving operation can be realised by controlling the first and/or second deceleration actuator accordingly.

Preferably, the deceleration system comprises an interface configured for connecting with at least one further deceleration system in particular of a trailer towed by the vehicle, wherein the interface is configured to generate a further deceleration system deceleration demand according to the fluidic deceleration demand or according to a distributed fluidic deceleration demand, which is generated from the fluidic deceleration demand.

According to a further aspect of the invention, a vehicle comprising a device as described above, or a deceleration system as described above is provided.

The vehicle is preferably configured as a commercial vehicle, a truck, a trailer, a bus and/or as a combination of a towing vehicle and a trailer.

The vehicle preferably comprises a pure electric, a hybrid or a conventional powertrain.

According to a further aspect of the invention a method for controlling a deceleration system is provided, comprising the steps:
- receiving a fluidic main deceleration request;
- generating an electric deceleration demand according to the fluidic main deceleration request; and
- controlling at least one first deceleration actuator according to the electric deceleration demand.

The method is preferably executed by electronical means of a device as described above.

Further features of the method can be derived from the above description, accordingly.

According to a further aspect of the invention, a computer program product is provided comprising code means configured to carry out the method when being executed by a data processing unit of a device as described above.

In the following, the invention is described according to preferred embodiments, wherein reference is made to the attached drawings.

In detail, the figures show the following:
Fig. 1a to 1d show particular embodiments of the device according to the invention.
Fig. 2 to 5 show particular embodiments of deceleration systems according to the invention.

In each Figure, signal paths are shown by arrows. That means, that only the supplying of the signal itself is shown not the technical solution how the supplying is carried out. An electric signal is usually transferred or supplied by wire but in general, wireless supplying is not excluded.

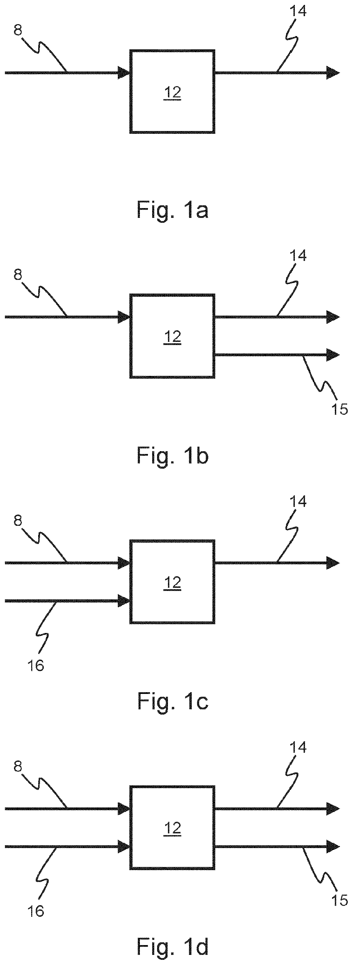

**Fig. 1a** shows an embodiment of a device 12 according to the invention.

The device 12 is configured to receive a fluidic main deceleration request 8. The fluidic main deceleration request 8 can be supplied by an input unit of a deceleration system, in particular by a brake pedal. The fluidic main deceleration request 8 comprises an information for a target deceleration of the vehicle the device 12 is attached to.

The device 12 is configured to generate an electric deceleration demand 14 according to the fluidic main deceleration request 8.

The electric deceleration demand 14 is capable to control at least one first deceleration actuator as described above or to act as an input value for a deceleration system, wherein the deceleration system is configured to generate actuator deceleration demands based in the electric deceleration demand 14, accordingly. Thereby, the device 12 can be configured to supply the same electric deceleration demand 14 to more than one first deceleration actuator. Alternatively or additionally, the device 12 can be configured to supply different electric deceleration demands 14 to different first deceleration actuators, accordingly.

**Fig. 1b** shows another embodiment of a device 12 according to the invention.

A device 12 is shown basically according to the device 12 shown in Fig. 1a. Therefore, in the following, only the differences to the device 12 of Fig. 1a are described. Otherwise, reference is made to the description of Fig. 1a.

In addition to Fig. 1a, the device is configured to generate a fluidic deceleration demand 15 according to the fluidic main deceleration request and to supply it to a second deceleration actuator, which is configured to be actuated by a fluidic deceleration demand 15. Alternatively, the fluidic deceleration demand 15 is capable to act as an input value for a deceleration system, wherein the deceleration system is configured to generate actuator deceleration demands based on the fluidic deceleration demand 15, accordingly. Thereby, besides controlling at least one first deceleration actuator, the device 12 can control at least one second deceleration actuator as described above.

The device 12 can be configured to supply the same fluidic deceleration demand 15 to more than one second deceleration actuator. Alternatively or additionally, the device 12 can be configured to supply different fluidic deceleration demands 15 to different second deceleration actuators, accordingly.

**Fig. 1c** shows another embodiment of a device 12 according to the invention.

A device 12 is shown basically according to the device 12 shown in Fig. 1a. Therefore, in the following, only the differences to the device 12 of Fig. 1a are described. Otherwise, reference is made to the description of Fig. 1a.

Additional to the fluidic main deceleration request 8, the device is configured to receive an electric input signal 16. The electric input signal 16 can be supplied by an input unit of the deceleration system, in particular by an accelerator pedal or by a driver input device, which is preferably configured for manual operation and in particular comprising a retarder input device, like a retarder lever. However, alternatively or additionally, other sources for the electric input signal 16 are possible as well, like a mode information for activating an endurance brake unit. According to a preferred embodiment, the electric input signal 16 comprises an information for a target deceleration of the vehicle the device 12 is attached to. In particular, this information can be provided by an accelerator pedal, which is used in a one pedal drive mode, which means that at particular pedal positions, a deceleration demand is generated by the accelerator pedal and supplied as an electric input signal 16 to the device 12.

The device 12 is configured to use both, the fluidic main deceleration request 8 and the electric input signal 16 to generate the electric deceleration demand(s) 14. For example, if the electric input signal 16 represents a target deceleration demand, the device can be configured to use both, the information of the main fluidic deceleration demand 8 and of the electric input signal 16, for example by adding them up. However, according to another embodiment, the device 12 is configured to decide to exclude the fluidic main deceleration request 8 or the electric input signal 16 from processing the electric deceleration demand(s) 14.

**Fig. 1d** shows another embodiment of a device 12 according to the invention.

The device 12 according to Fig. 1d is configured to receive the fluidic main deceleration request 8 and the electric input signal 16 and to generate the electric deceleration demand(s) 14 and the fluidic deceleration demand(s) 15.

The device 12 according to Fig. 1d can be configured according to the devices 12 shown by the Figures 1a to 1c. Therefore, reference is made to the description of these Figures.

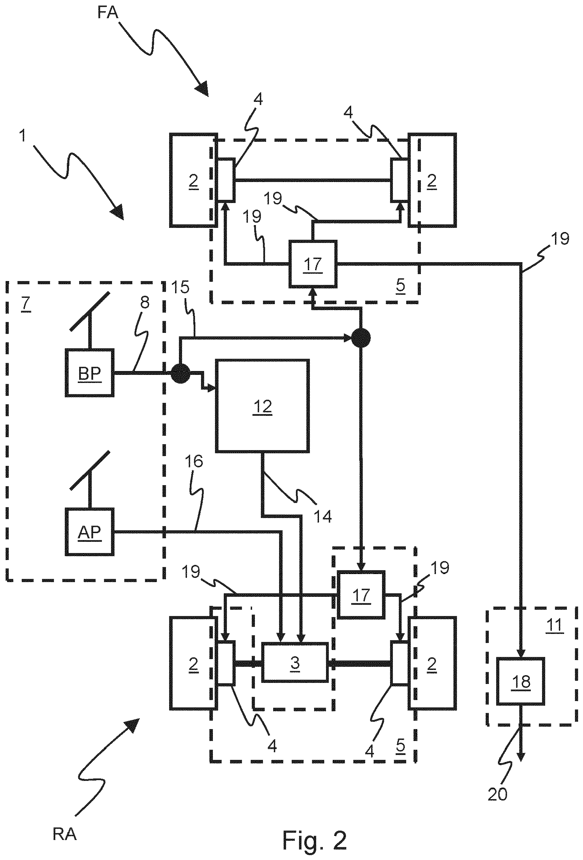

**Fig. 2** shows an embodiment of a deceleration system 1 according to the invention.

A deceleration system 1 is shown, which is configured to decelerate a vehicle. The vehicle comprises wheels 2 attached to a front axle FA and a rear axle RA of the vehicle. In Fig. 2 the layout of the deceleration system 1 is shown from above.

A first deceleration actuator 3 is provided to the rear axle RA. The deceleration actuator can comprise an electric machine configured to decelerate the vehicle in a generator operating mode, wherein the electric machine is configured to move the vehicle in a driving mode by generating a driving torque. Alternatively or additionally, the deceleration actuator 3 comprises a brake unit, an endurance brake unit, in particular a retarder and/or an eddy current brake. The first deceleration actuator 3 is configured to be actuated by an electric deceleration demand 14 and by an electric input signal 16.

Each axle FA, RA comprises a second deceleration actuator 5 configured to be actuated by a fluidic deceleration demand 15. Each second deceleration actuator 5 comprises a distribution unit 17 configured to supply a distributed fluidic deceleration demand 19 to brake units 4 of the second deceleration actuator 5. Each brake unit 4 is configured to generate a deceleration effect on one wheel 2. The brake unit 4 comprises mechanical brake, in particular a friction brake, actuated fluidly according to the distributed fluidic deceleration demand 19. The distribution unit 17 is configured to supply an individual distributed fluidic deceleration demand 19 to each brake unit 4 according to the fluidic deceleration demand 15. Typically, the fluidic deceleration demand 15 acts as a control signal, wherein the distribution unit 17 uses this control signal to generate the fluidic deceleration demand 19 from another fluidic source, in particular a pressure reservoir of the deceleration system 1.

Further, the distribution unit 17 of the front axle FA is configured to supply a further fluidic deceleration demand 19 to an interface 11 of the deceleration system 1. The interface 11 is configured for connecting with at least one further deceleration system, in particular of a trailer towed by the vehicle, wherein the interface 11 is configured to generate a further deceleration system deceleration demand 20. The interface further comprises an interface control unit 18 configured to generate the further deceleration system deceleration demand 20 according to the distributed fluidic deceleration demand 19 supplied to the interface control unit 18.

The deceleration system 1 comprises an input unit 7 comprising a brake pedal BP and an accelerator pedal AP. The brake pedal BP is configured to supply a fluidic main deceleration request 8 to the deceleration system 1 and the accelerator pedal AP is configured to supply an electric input signal 16 to the first deceleration actuator 3 for controlling. Therefore, a driver can control the first deceleration actuator 3 by the accelerator pedal AP, for example in a one pedal drive mode.

The fluidic main deceleration request 8 is supplied as fluidic deceleration demand 15 to the second deceleration actuators 5 as a fluidic control signal. Therefore, a driver can control the second deceleration actuators 5 by the brake pedal BP.

Further, the deceleration system 1 comprises a device 12 as shown in Fig. 1a. The device 12 is configured the fluidic main deceleration request 8 from the input unit 7 and to generate an electric deceleration demand 14 according to the fluidic main deceleration request 8. By supplying the electric deceleration demand 14 to the first deceleration actuator 3, the device 12 allows a control of the electrically actuated first deceleration actuator 3 by the brake pedal BP, which is only providing a fluidic main deceleration request 8.

As it can be understood by a person skilled in the art, the deceleration system 1 comprises essentially a fluidic controlled brake system, which comprises the brake pedal BP and the second deceleration actuators 5. Further, the vehicle comprises the electrically controlled first deceleration actuator 3. By providing the device 12 as shown in Fig. 2 it is possible to control both, the first deceleration actuator 3 and the second deceleration actuator 5 by the input device 7, respectively by the brake pedal BP, which is only supplying a fluidic main deceleration request 8.

From the fluidic main deceleration request 8, the device 12 gets the information about the target deceleration of the vehicle, that is generated from the driver's input to the brake pedal BP. According to this information, the device 12 is configured to generate the electric deceleration demand 14 accordingly, to operate according to a deceleration force distribution and/or a decelerator actuator blending.

Therefore, providing the device 12 allows deceleration of the vehicle by intelligent use of the first deceleration actuator 3 and the second deceleration actuator 5.

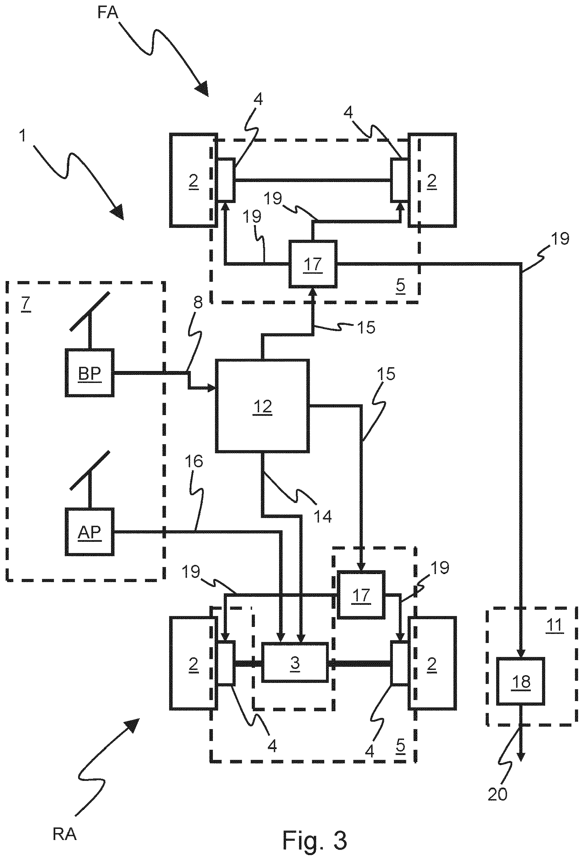

**Fig. 3** shows a second embodiment of a deceleration system according to the invention.

A deceleration system 1 is shown basically according to the deceleration system 1 shown in Fig. 2. Therefore, in the following, only the differences to the deceleration system 1 of Fig. 2 are described. Otherwise, reference is made to the description of Fig. 2.

According to this embodiment, a device 12 according to Fig. 1b is provided to the deceleration system 1. That means, in contrast to the deceleration system 1 according to Fig. 2, the fluidic deceleration demand 15 is not directly supplied to the second deceleration actuators 5. Instead, the device 12 generates the fluidic deceleration demands 15, that can be supplied as separate signals or as the same signal to the second deceleration actuators 5, according to the fluidic main deceleration request 8.

That means, the device itself can be configured to control the first deceleration actuator 3 and the second deceleration actuators 5, wherein the fluidic deceleration demands 15 can be adjusted by the device 12 itself. This is advantageous in comparison to the embodiment according to Fig. 2 since the fluidic main deceleration request 8 in the embodiment of Fig. 2 is only meant to be as an information to the device 12 about the value of the fluidic deceleration demand(s) 15.

Therefore, the device 12 is configured to generate the electric deceleration demand 14 accordingly, to operate according to a deceleration force distribution and/or a decelerator actuator blending.

Therefore, providing the device 12 allows deceleration of the vehicle by intelligent use of the first deceleration actuator 3 and the second deceleration actuators 5 and in particular by individual control of the second deceleration actuators 5.

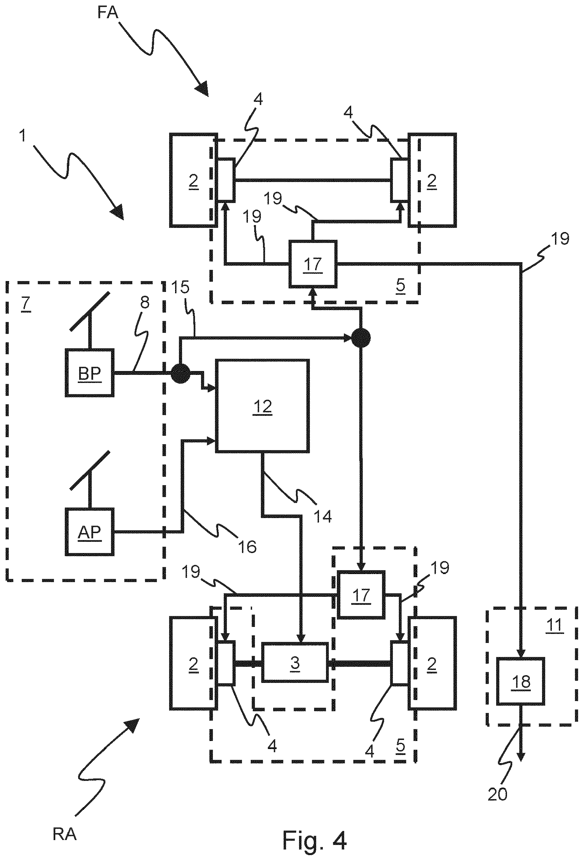

**Fig. 4** shows a third embodiment of a deceleration system according to the invention.

A deceleration system 1 is shown basically according to the deceleration system 1 shown in Fig. 2. Therefore, in the following, only the differences to the deceleration system 1 of Fig. 2 are described. Otherwise, reference is made to the description of Fig. 2.

According to this embodiment, a device 12 according to Fig. 1c is provided to the deceleration system 1. That means, in contrast to the deceleration system 1 according to Fig. 2, the electric input signal 16 from the input unit 7, respectively from the accelerator pedal AP is not directly supplied to the first deceleration actuator 3. Instead, the electric input signal 16 is supplied to the device 12.

Therefore, the device 12 can use the electric input signal 16 to generate the electric deceleration demand 14 and also the acceleration request. That means, it is possible to operate the deceleration system 1 according to a deceleration force distribution, a decelerator actuator blending and/or a one pedal drive mode.

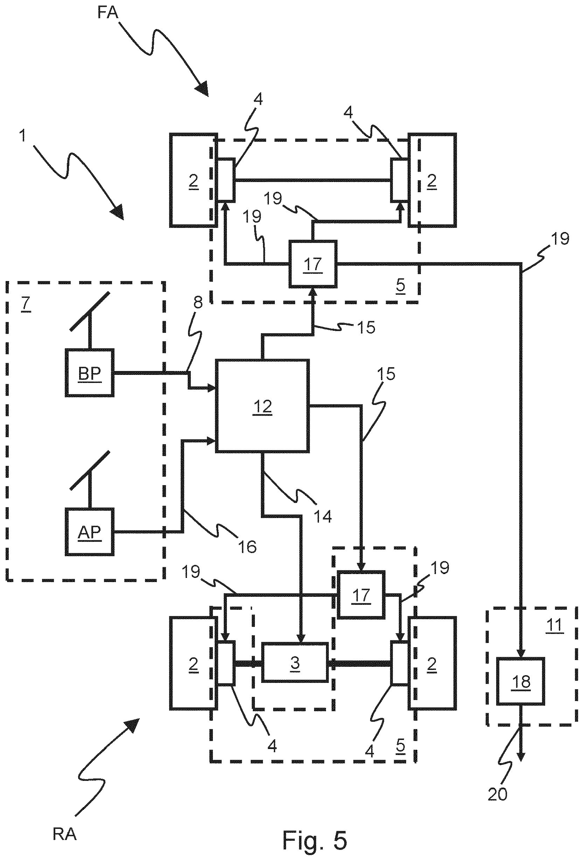

**Fig. 5** shows a fourth embodiment of a deceleration system according to the invention.

A deceleration system 1 is shown comprising a device 12 according to Fig. 1d. That means, this embodiment can be operated according to each embodiment shown in Fig. 2 to 4. Therefore, reference is made to the description of these Figures.

The deceleration systems shown in the Figures 2 to 5 are not limiting the scope of the invention. Instead, other embodiments fall under the scope of the invention as well. In particular, these are deceleration systems, wherein the distribution unit 17, which is related to the rear axle RA, is configured to generate the distributed fluidic deceleration demand 19. Further, deceleration systems can be provided comprising a separate distribution unit configured to generate the distributed fluidic deceleration demand 19.

According to further embodiments, the deceleration system 1 of Figures 2 to 5 is configured to generate actuator deceleration demands from the electric deceleration demand(s) 14 and or from the fluidic deceleration demand(s) 15 for the deceleration actuators 3, 5.

### LIST OF REFERENCE SIGNS

- 1: deceleration system
- 2: wheel
- 3: first deceleration actuator
- 4: brake unit
- 5: second deceleration actuator
- 7: input unit
- 8: fluidic main deceleration request
- 11: interface
- 12: device
- 14: electric deceleration demand
- 15: fluidic deceleration demand
- 16: electric input signal
- 17: distribution unit
- 18: interface control unit
- 19: distributed fluidic deceleration demand
- 20: further fluidic deceleration system deceleration demand
- AP: accelerator pedal
- BP: brake pedal
- FA: front axle
- RA: rear axle

## Claims

1. Device (12) for controlling a deceleration system (1) of a vehicle comprising:
- an input port configured to receive a fluidic main deceleration request (8), and
- an output port configured to supply an electric deceleration demand (14) to the deceleration system (1), wherein
the device (12) is configured to generate the electric deceleration demand (14) according to the fluidic main deceleration request (8), **characterised in that**
the device (12) is configured to generate a fluidic deceleration demand (15) according to the fluidic main deceleration request (8) and to supply the fluidic deceleration demand (15) to the deceleration system (1) via an output port of the device (12).

2. Device (12) according to claim 1, wherein
the device (12) is configured to receive an electric input signal (16) via an input port of the device (12), wherein the device (12) is configured to generate the electric deceleration demand (14) according to the electric input signal (16).

3. Device (12) according to one of the preceding claims, wherein
the device (12) is configured to process a deceleration force distribution and/or a decelerator actuator blending and/or a one pedal driving mode.

4. Device (12) according to one of the preceding claims, wherein
the device (12) is configured as a modular unit, in particular comprising a housing.

5. Deceleration system (1) for a vehicle comprising:
- at least one first deceleration actuator (3) configured to be actuated by an electric deceleration demand (14);
- at least one input unit (7) configured to generate a fluidic main deceleration request (8) according to at least one input value, wherein
the deceleration system (1) is configured to generate the electric deceleration demand (14) for controlling the at least one first deceleration actuator (3) according to the fluidic main deceleration request (8) and wherein the deceleration system (1) comprises a device (12) according to one of the claims 1 to 4, wherein the deceleration system (1) further comprises
at least one second deceleration actuator (5) configured to be actuated by a fluidic deceleration demand (15); and wherein
the deceleration system (1) is configured to generate the fluidic deceleration demand (15) for controlling the at least one second deceleration actuator (5) according to the fluidic main deceleration request (8), in particular during the same operating mode which is preferably a normal operating mode.

6. Deceleration system (1) according to claim 5, wherein
the at least one input unit (7) is configured to generate an electric input signal (16) according to at least one further input value, wherein
the deceleration system (1) is configured to generate the electric deceleration demand (14) according to the electric input signal (16).

7. Deceleration system (1) according to claim 5 or 6, wherein
the at least one input value comprises an input value from a driver, in particular from a brake pedal (BP) and/or from an accelerator pedal (AP) and/or from a driver input device and/or from a control unit for autonomous driving.

8. Deceleration system (1) according to one of the claims 5 to 7, wherein
the at least one first deceleration actuator (3) comprises a brake unit, an endurance brake unit, in particular a retarder, and/or an electric machine, and/or wherein
the at least one second deceleration actuator (5) comprises a brake unit (4) in particular a mechanical brake, in particular a friction brake.

9. Deceleration system (1) according to one of the claims 5 to 8, wherein
the deceleration system (1) is configured to perform a deceleration force distribution and/or a blending operation between the at least one first deceleration actuator (3) and the at least one second deceleration actuator (5) and/or a one pedal driving mode.

10. Deceleration system (1) according to one of the claims 5 to 9, comprising
an interface (11) configured for connecting with at least one further deceleration system, wherein
the interface (11) is configured to generate a further deceleration system deceleration demand (20).

11. Vehicle comprising a device (12) according to one of the claims 1 to 4 or a deceleration system (1) according to one of the claims 5 to 10, wherein
the vehicle is preferably configured as a commercial vehicle, a truck, a trailer, a bus and/or as a combination of a towing vehicle and a trailer, and/or wherein
the vehicle preferably comprises a pure electric, a hybrid or a conventional powertrain.

12. Method for controlling a deceleration system (1) according to one of the claims 5 to 10 comprising the steps
- receiving a fluidic main deceleration request (8);
- generating an electric deceleration demand (14) according to the fluidic main deceleration request (8); and
- controlling at least one first deceleration actuator (3) according to the electric deceleration demand (14).

13. Computer program product comprising code means configured to carry out the method according to claim 12 when being executed by a data processing unit of a device (1) according to claims 1 to 4.

## Patentansprüche

1. Vorrichtung (12) zum Steuern eines Verzögerungssystems (1) eines Fahrzeugs, umfassend:
- einen Eingangsanschluss, der zum Empfangen einer Anfrage (8) zur fluidischen Hauptverzögerung konfiguriert ist, und
- einen Ausgangsanschluss, der zum Zuführen einer Anforderung (14) zur elektrischen Verzögerung an das Verzögerungssystem (1) konfiguriert ist, wobei
die Vorrichtung (12) zum Erzeugen der Anforderung (14) zur elektrischen Verzögerung gemäß der Anfrage (8) zur fluidischen Hauptverzögerung konfiguriert ist, **dadurch gekennzeichnet, dass**
die Vorrichtung (12) zum Erzeugen einer Anforderung (15) zur fluidischen Verzögerung gemäß der Anfrage (8) zur fluidischen Hauptverzögerung und zum Zuführen der Anforderung (15) zur fluidischen Verzögerung an das Verzögerungssystem (1) über einen Ausgangsanschluss der Vorrichtung (12) konfiguriert ist.

2. Vorrichtung (12) nach Anspruch 1, wobei
die Vorrichtung (12) zum Empfangen eines elektrischen Eingangssignals (16) über einen Eingangsanschluss der Vorrichtung (12) konfiguriert ist, wobei die Vorrichtung (12) zum Erzeugen der Anforderung (14) zur elektrischen Verzögerung gemäß dem elektrischen Eingangssignal (16) konfiguriert ist.

3. Vorrichtung (12) nach einem der vorstehenden Ansprüche, wobei
die Vorrichtung (12) zum Verarbeiten einer Verzögerungskraftverteilung und/oder eines Blendings des Verzögerungsaktuators und/oder eines Ein-Pedal-Fahrmodus konfiguriert ist.

4. Vorrichtung (12) nach einem der vorstehenden Ansprüche, wobei
die Vorrichtung (12) als modulare Einheit konfiguriert ist, die insbesondere ein Gehäuse umfasst.

5. Verzögerungssystem (1) für ein Fahrzeug, umfassend:
- mindestens einen ersten Verzögerungsaktuator (3), der dazu konfiguriert ist, durch eine Anforderung (14) zur elektrischen Verzögerung betätigt zu werden;
- mindestens eine Eingabeeinheit (7), die dazu konfiguriert ist, eine Anfrage (8) zur fluidischen Hauptverzögerung gemäß mindestens einem Eingabewert zu erzeugen, wobei
das Verzögerungssystem (1) zum Erzeugen der Anforderung (14) zur elektrischen Verzögerung zum Steuern des mindestens einen ersten Verzögerungsaktuators (3) gemäß der Anfrage (8) zur fluidischen Hauptverzögerung konfiguriert ist und wobei das Verzögerungssystem (1) eine Vorrichtung (12) nach einem der Ansprüche 1 bis 4 umfasst, wobei das Verzögerungssystem (1) ferner umfasst
mindestens einen zweiten Verzögerungsaktuator (5), der dazu konfiguriert ist, durch eine Anforderung (15) zur fluidischen Verzögerung betätigt zu werden; und wobei
das Verzögerungssystem (1) zum Erzeugen der Anforderung (15) zur fluidischen Verzögerung konfiguriert ist, um den mindestens einen zweiten Verzögerungsaktuator (5) gemäß der Anfrage (8) zur fluidischen Hauptverzögerung zu steuern, insbesondere während des gleichen Betriebsmodus, der vorzugsweise ein normaler Betriebsmodus ist.

6. Verzögerungssystem (1) nach Anspruch 5, wobei
die mindestens eine Eingabeeinheit (7) zum Erzeugen eines elektrischen Eingangssignals (16) gemäß mindestens einem weiteren Eingabewert konfiguriert ist, wobei
das Verzögerungssystem (1) zum Erzeugen der Anforderung (14) zur elektrischen Verzögerung gemäß dem elektrischen Eingangssignal (16) konfiguriert ist.

7. Verzögerungssystem (1) nach Anspruch 5 oder 6, wobei
der mindestens eine Eingabewert einen Eingabewert von einem Fahrer, insbesondere von einem Bremspedal (BP) und/oder von einem Gaspedal (AP) und/oder von einer Eingabevorrichtung des Fahrers und/oder von einer Antriebseinheit für autonomes Fahren umfasst.

8. Verzögerungssystem (1) nach einem der Ansprüche 5 bis 7, wobei
der mindestens eine erste Verzögerungsaktuator (3) eine Bremseinheit, eine Dauerbremseinheit, insbesondere einen Retarder, und/oder eine elektrische Maschine umfasst, und/oder wobei
der mindestens eine zweite Verzögerungsaktuator (5) eine Bremseinheit (4), insbesondere eine mechanische Bremse, insbesondere eine Reibungsbremse, umfasst.

9. Verzögerungssystem (1) nach einem der Ansprüche 5 bis 8, wobei
das Verzögerungssystem (1) zum Durchführen einer Verzögerungskraftverteilung und/oder eines Blendingvorgangs zwischen dem mindestens einen ersten Verzögerungsaktuator (3) und dem mindestens einen zweiten Verzögerungsaktuator (5) und/oder einem Pedalantriebsmodus konfiguriert ist.

10. Verzögerungssystem (1) nach einem der Ansprüche 5 bis 9, umfassend
eine Schnittstelle (11), die zur Verbindung mit mindestens einem weiteren Verzögerungssystem konfiguriert ist, wobei
die Schnittstelle (11) zum Erzeugen einer weiteren Verzögerungsanforderung (20) für das Verzögerungssystem konfiguriert ist.

11. Fahrzeug, umfassend eine Vorrichtung (12) nach einem der Ansprüche 1 bis 4 oder ein Verzögerungssystem (1) nach einem der Ansprüche 5 bis 10, wobei
das Fahrzeug vorzugsweise als Nutzfahrzeug, Lastkraftwagen, Anhänger, Bus und/oder als Kombination aus Zugfahrzeug und Anhänger konfiguriert ist, und/oder wobei
das Fahrzeug vorzugsweise einen rein elektrischen, einen hybriden oder einen herkömmlichen Antriebsstrang umfasst.

12. Verfahren zum Steuern eines Verzögerungssystems (1) nach einem der Ansprüche 5 bis 10, umfassend die Schritte
- Empfangen einer Anfrage (8) zur fluidischen Hauptverzögerung;
- Erzeugen einer Anforderung (14) zur elektrischen Verzögerung gemäß der Anfrage (8) zur fluidischen Hauptverzögerung; und
- Steuern mindestens eines ersten Verzögerungsaktuators (3) gemäß der Anforderung (14) zur elektrischen Verzögerung.

13. Computerprogrammprodukt, das Codemittel umfasst, die zum Ausführen des Verfahrens nach Anspruch 12 konfiguriert sind, wenn es von einer Datenverarbeitungseinheit einer Vorrichtung (1) nach den Ansprüchen 1 bis 4 ausgeführt wird.

## Revendications

1. Dispositif (12) de commande d'un système de décélération (1) d'un véhicule comprenant :
- un port d'entrée configuré pour recevoir une demande de décélération principale fluidique (8), et
- un port de sortie configuré pour fournir un ordre de décélération électrique (14) au système de décélération (1), dans lequel
le dispositif (12) est configuré pour générer l'ordre de décélération électrique (14) en fonction de la demande de décélération principale fluidique (8), **caractérisé en ce que**
le dispositif (12) est configuré pour générer un ordre de décélération fluidique (15) en fonction de la demande de décélération principale fluidique (8) et pour fournir l'ordre de décélération fluidique (15) au système de décélération (1) via un port de sortie du dispositif (12).

2. Dispositif (12) selon la revendication 1, dans lequel
le dispositif (12) est configuré pour recevoir un signal d'entrée électrique (16) via un port d'entrée du dispositif (12), dans lequel le dispositif (12) est configuré pour générer l'ordre de décélération électrique (14) en fonction du signal d'entrée électrique (16).

3. Dispositif (12) selon l'une des revendications précédentes, dans lequel
le dispositif (12) est configuré pour traiter une répartition de force de décélération et/ou un mélange actionneur-décélérateur et/ou un mode de conduite à une pédale.

4. Dispositif (12) selon l'une des revendications précédentes, dans lequel
le dispositif (12) est configuré sous forme d'unité modulaire, comprenant en particulier un boîtier.

5. Système de décélération (1) pour un véhicule comprenant :
- au moins un premier actionneur de décélération (3) configuré pour être actionné par un ordre de décélération électrique (14) ;
- au moins une unité d'entrée (7) configurée pour générer une demande de décélération principale fluidique (8) en fonction d'au moins une valeur d'entrée, dans lequel
le système de décélération (1) est configuré pour générer l'ordre de décélération électrique (14) pour commander le au moins un premier actionneur de décélération (3) en fonction de la demande de décélération principale fluidique (8) et dans lequel le système de décélération (1) comprend un dispositif (12) selon l'une des revendications 1 à 4, dans lequel le système de décélération (1) comprend en outre
au moins un second actionneur de décélération (5) configuré pour être actionné par un ordre de décélération fluidique (15) ; et dans lequel
le système de décélération (1) est configuré pour générer l'ordre de décélération fluidique (15) pour commander le au moins un second actionneur de décélération (5) en fonction de la demande de décélération fluidique principale (8), notamment pendant le même mode de fonctionnement qui est de préférence un mode de fonctionnement normal.

6. Système de décélération (1) selon la revendication 5, dans lequel
la au moins une unité d'entrée (7) est configurée pour générer un signal d'entrée électrique (16) en fonction d'au moins une autre valeur d'entrée, dans lequel
le système de décélération (1) est configuré pour générer l'ordre de décélération électrique (14) en fonction du signal d'entrée électrique (16).

7. Système de décélération (1) selon la revendication 5 ou 6, dans lequel
la au moins une valeur d'entrée comprend une valeur d'entrée provenant d'un conducteur, en particulier d'une pédale de frein (BP) et/ou d'une pédale d'accélérateur (AP) et/ou provenant d'un périphérique d'entrée conducteur et/ou provenant d'une unité de commande pour la conduite autonome.

8. Système de décélération (1) selon l'une des revendications 5 à 7, dans lequel
le au moins un premier actionneur de décélération (3) comprend une unité de freinage, une unité de freinage d'endurance, en particulier un ralentisseur, et/ou une machine électrique, et/ou dans lequel
le au moins un second actionneur de décélération (5) comprend une unité de freinage (4), en particulier un frein mécanique, en particulier un frein à friction.

9. Système de décélération (1) selon l'une des revendications 5 à 8, dans lequel
le système de décélération (1) est configuré pour effectuer une répartition de force de décélération et/ou une opération de mélange entre le au moins un premier actionneur de décélération (3) et le au moins un second actionneur de décélération (5) et/ou un mode de conduite à une pédale.

10. Système de décélération (1) selon l'une des revendications 5 à 9, comprenant
une interface (11) configurée pour se connecter à au moins un autre système de décélération, dans lequel
l'interface (11) est configurée pour générer un ordre de décélération de système de décélération supplémentaire (20).

11. Véhicule comprenant un dispositif (12) selon l'une des revendications 1 à 4 ou un système de décélération (1) selon l'une des revendications 5 à 10, dans lequel
le véhicule est de préférence configuré comme un véhicule utilitaire, un camion, une remorque, un bus et/ou comme combinaison d'un véhicule tracteur et d'une remorque, et/ou dans lequel
le véhicule comprend de préférence un groupe motopropulseur purement électrique, hybride ou conventionnel.

12. Procédé de commande d'un système de décélération (1) selon l'une des revendications 5 à 10 comprenant les étapes suivantes
- la réception d'une requête de décélération principale fluidique (8) ;
- la génération d'un ordre de décélération électrique (14) en fonction de la demande de décélération principale fluidique (8) ; et
- la commande d'au moins un premier actionneur de décélération (3) en fonction de l'ordre de décélération électrique (14).

13. Produit de programme informatique comprenant des moyens de code configurés pour mettre en oeuvre le procédé selon la revendication 12 lorsqu'il est exécuté par une unité de traitement de données d'un dispositif (1) selon les revendications 1 à 4.
